# EUROPEAN PATENT APPLICATION

(11) **EP 1 518 866 A1**
(43) Date of publication of application: **30.03.2005**
(21) Application number: 03103601.5
(22) Date of filing: 29.09.2003
(51) Int. Cl.: C08F 110/02, C08F 4/654, C08F 4/651

(54) **Process for the preparation of porous ethylene polymers**

(71) Applicant: Basell Poliolefine Italia S.P.A., 20124 Milano (IT)
(72) Inventor: Brita, Diego, 44100, Ferrara (IT); Collina, Gianni Basell Poliolefine Italia S.p.A., 44044, Ferrara (IT)
(74) Representative: Colucci, Giuseppe

(57) **Abstract**

The invention relates to a process for the preparation of porous ethylene polymers and to a specific group of ethylene polymers therefrom obtained. In particular, the present invention relates to a process for the preparation of ethylene (co)polymers characterized by:
- prepolymerizing propylene in the presence of a Mg, Ti, and halogen containing solid catalyst component having a porosity, higher than 0.25 cc/g up to producing from 0.1 to 15 g of propylene pre-polymer per g of catalyst component; and
- polymerizing ethylene in the presence of the propylene pre-polymer obtained in step (i) up to an amount of ethylene polymer ranging from 10g to 2.5 kg per g of propylene pre-polymer.

## Description

The present invention relates to a process for the preparation of porous ethylene polymers and to a specific group of ethylene polymers therefrom obtained. In particular, the present invention relates to a process for the preparation of ethylene (co)polymers characterized by (co)polymerizing ethylene under specific conditions.

Porous ethylene polymers are known in the art. They are specialty polymers used for example in the preparation of masterbatches containing polymer additives such as pigments or stabilizers. In addition, they can also be used as carriers for catalysts especially in the cases in which it is desired to impart morphological properties to certain catalysts. As an example, certain homogeneous coordination catalysts such as metallocenes, can be supported on porous polymers when it is necessary that the catalyst has the morphological requirements for it to be used in particular processes such as gas-phase polymerization processes. In view of these uses, it is important for the porous ethylene polymers to have both a high level of total porosity and a porosity distribution such that the highest possible amount of it is due to pores having a radius large enough to serve as a container for the materials to be supported.

EP 598543 describes the use of certain porous polymers as a (i) support for a (iii) transition metal metallocene compound and a (ii) alumoxane activator. The porous polymers described are those commercialized under the trade name "Accurel". It is known that in these polymers a certain level of porosity is created on an originally non-porous polymer by virtue of a series of step comprising the contact of the said non-porous polymer with a solvent able to extract small fractions of it. The final level of total porosity depends upon the materials used (starting polymer, type of solvent) and the conditions adopted (temperature, concentrations, etc.). Moreover, the porosity distribution is such that a too high proportion of the porosity derives from pores having a radius ranging from 0.025 to 1µm thus leaving only a very small extent of porosity deriving from pores with radius higher than 1 µm. In addition, the process in itself is burdensome and expensive because it involves the use of large amounts of solvents that need to be purified and recycled.

An example of ethylene porous polymers produced with an alternative method is described in USP 5,231,119. In this case the ethylene porous polymer is easily obtained directly by (co)polymerizing ethylene in the presence of an already porous catalyst. The porosity of the catalyst is somewhat replicated, with a different scale, in the polymer thereby giving origin to a polyethylene that, has a total porosity expressed as percentage of voids of only about 30% which may be not enough to have an efficient incorporation of different materials in the polymer.

In view of the above, it is strongly felt the need of a process able to produce in a smooth and economic way, a porous ethylene polymer having a high level of porosity and a suitable porosity distribution.

The applicant surprisingly found that a process for the (co)polymerization of ethylene carried out in the presence of a porous catalysts and under specific polymerization conditions satisfies the needs.

It is therefore an object of the present invention a process for the preparation of a porous ethylene polymer comprising:
(i) prepolymerizing propylene in the presence of a Mg, Ti, and halogen containing solid catalyst component having a porosity, measured by the mercury method set forth below, higher than 0.25 cc/g up to producing from 0.1 to 15 g of propylene pre-polymer per g of catalyst component; and
(ii) (co)polymerizing ethylene in the presence of the propylene pre-polymer obtained in step (i) up to an amount of ethylene polymer ranging from 10g to 2.5 kg per g of propylene pre-polymer.

According to a particular embodiment, step (i) is carried out under conditions such that the amount of propylene pre-polymer produced is from 0.3 to 10 g per g of catalyst component and preferably from 0.5 to 5 g per g of catalyst component.

Optionally, in step (ii), ethylene can be polymerized in the presence of small amounts of C3-C 10 alpha-olefins. The amount of ethylene (co)polymer produced is preferably less than 1 kg and more preferably said amount is less than 0.800 Kg per g of propylene pre-polymer. In particular, very satisfactory results have been obtained when the amount of the ethylene polymer is from 10 to 600 g per g of propylene pre-polymer.

The catalyst component usable in step (i) of the present invention comprises a titanium compound supported on a magnesium dihalide. The magnesium halides, preferably MgCl₂, in active form used as a support for Ziegler-Natta catalysts, are widely known from the patent literature. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is broadened to form a halo.

The preferred titanium compounds are those of formula Ti(OR)_{n-y}X_{y}, where R is a C1-C20 hydrocarbon group, X is halogen, n is the valence of titanium and y is a number between 0 and n. Particularly preferred compounds are the Ti-tetraalcoholates and those having at least one Ti-chlorine bond such as TiCl₄, TiCl₃ and Ti-chloroalcoholates of formula Ti(OR^{I})ₐClₙ₋ₐ where n is the valence of titanium, a is a number comprised between 1 and n, and R^{I} is a C1-C8 alkyl or aryl group. Preferably R^{I} is selected from n-butyl, isobutyl, 2-ethylhexyl, n-octyl and phenyl.

The titanium compound can be pre-formed, or be produced in-situ by the reaction of a titanium tetrahalide, in particular TiCl₄, with alcohols ROH or with titanium alkoxides having the formula Ti(OR)₄ where R has the meaning defined above.

In the alternative, the titanium tetralkoxides can be caused to react with halogenating compounds such as, for instance, SiCl₄, AlCl₃, chlorosilanes, Al-alkyl halides to form titanium haloalcoholates. In the latter case, the titanium valence is reduced and titanium haloalkoxides are formed wherein the titanium valence is lower than 4.

As mentioned above, the catalyst component used in step (i) has a porosity, referred to pores having radius up to 1µ, and measured by the mercury method set forth below, of at least 0.25 cm³/g. Preferably, said porosity is higher than 0.3 cm³/g, and more preferably higher than 0.45 cm³/g.

The surface area measured by the BET method specified below (nitrogen absorption) is generally lower than 100 m²/g, preferably lower than 80 m²/g and in particular ranging from 30 and 70 m²/g. The porosity measured by the BET method generally ranges from 0.1 and 0.5, preferably from 0.15 to 0.4 cm³/g.

The porous catalyst components used in the process of the present invention are preferably non-stereospecific. According to the present invention the term "non-stereospecific solid catalyst component" means a solid catalyst component that gives, under the standard polymerization conditions described below, a propylene homopolymer having an insolubility in xylene at 25°C lower than 90% and preferably lower than 85%.

If desired, the stereospecificity can be increased by including in the solid catalyst component an electron donor compound that can be chosen among organic esters, ketones, ethers, and amines. Specifically, It can be selected from alkyl, cycloalkyl or aryl esters of monocarboxylic acids, for example benzoic acid, or polycarboxylic acids, for example phthalic or malonic acid, the said alkyl, cycloalkyl or aryl groups having from 1 to 18 carbon atoms. Moreover, it can be also selected among the 1,3-diethers.

The preparation of the porous solid catalyst component can be carried out according to several methods. According to a preferred general method, the solid catalyst component can be prepared by reacting a titanium compound of formula Ti(OR)_{n-y}X_{y}, where X, R, n, and y have the same meanings described above, with a magnesium chloride deriving from an adduct of formula

MgCl₂•pR^{II}OH, where p is a number between 0.1 and 6, preferably from 2 to 3.5, and R^{II} is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. The so obtained adduct, before being reacted with the Ti compound is previously subjected to thermally controlled dealcoholation (80-130 °C) so as to obtain an adduct in which the number of moles of alcohol is generally lower than 3 preferably between 0.1 and 2.5. The reaction with the Ti compound can be carried out for example by suspending the dealcoholated adduct in cold TiCl₄ (generally 0°C); the mixture is heated up to 80-130 °C and kept at this temperature for 0.5-2 hours. The treatment with TiCl₄ can be carried out one or more times.

Depending on the extent of dealcoholation, very porous catalysts can be obtained. As an example, values even higher of 0.8 cm³/g can be reached. The preparation of catalyst components in spherical form is described for example in European Patent Applications EP-A-395083.

According to a variation of the method described above the preparation of the solid catalyst components comprise the following steps:
(a) reacting a compound MgCl₂.mR^{II}OH, wherein 0.3 ≤ m ≤ 1.7 and R^{II} is as defined above, with a titanium compound of the formula Ti(OR)_{n-y}Cl_{y}, in which n, R, and y are as defined above,
(b) reacting the product obtained from (a) with an Al-alkyl compound and
(c) reacting the product obtained from (b) with a titanium compound of the formula Ti(OR^{I})ₐClₙ₋ₐ where a, n and R^{I} have the meanings explained above.

The compound MgCl₂·mR^{II}OH is prepared by thermal dealcoholation of adducts, having a higher alcohol content.

In the reaction of step (a) the molar ratio Ti/Mg is stoichiometric or higher; preferably this ratio in higher than 3. Still more preferably a large excess of titanium compound is used. Preferred titanium compounds are titanium tetrahalides, in particular TiCl₄.

In step (b) the product obtained from (a) is then reacted with an aluminum-alkyl compound. The aluminum alkyl compound is preferably selected from those of formula R^{III}_{z}AlX_{3-z} in which R^{III} is a C₁-C₂₀ hydrocarbon group, z is an integer from 1 to 3 and X is halogen, preferably chlorine. Particularly preferred is the use of the trialkyl aluminum compounds such as for example triethylaluminum, triisobutylaluminum, tri-n-butylaluminum, tri-n-hexylaluminum, tri-n-octylaluminum and tris(2,4,4-trimethyl-pentyl)aluminum. Use of tris(2,4,4-trimethyl-pentyl)aluminum is especially preferred. It is also possible to use mixtures of trialkylaluminum compounds with alkylaluminum halides, alkylaluminum hydrides or alkylaluminum sesquichlorides, such as AlEt₂Cl and Al₂Et₃Cl₃.

The reaction with the Al-alkyl compound with the product coming from (a) can be carried out in a hydrocarbon solvent at a temperature between -10°C and 130°C. Preferably the reaction is carried out at a temperature between 40 and 110°C. The molar ratio between the Al-alkyl compound and the product coming from (a) is not particularly critical. Generally the Al-alkyl compound can be used in molar ratios with the alcohol originally contained in the compound (a) from 0.01 to 100.

In the third step, the solid product coming from (b) is further reacted with a titanium compound of the same formula given above. Preferably, the specific titanium compound and the reaction conditions are similar to those used in the step (a). The use of the catalyst components prepared by this method is preferred. The porosity due to pores having radius up to 1µm is generally in the range 0.4-0.7 cm³/g.

For the catalyst components obtained from the specifically disclosed preparation methods the porosity due to pores with radius up to 0.1µm is lower than the value of the porosity due to pores with radius up to 1µm. However, the porosity distribution is such that generally the value of the porosity due to pores with radius up to 0.1µm falls in the range 60%-95% the value of the porosity due to pores with radius up to 1µm, preferably in the range 70%-95% and particularly in the range 80-95%.

This particular pore size distribution is also reflected in the average pore radius value which for these kind of catalyst components and taking into account the porosity due to pores up to 1µm, is lower than 900, preferably lower than 800 and still more preferably lower than 700.

Another variation of the general method disclosed above usable to prepare porous catalyst components, comprises (a) the thermal dealcoholation of the adducts MgCl₂·mR^{II}OH until forming adducts in which the alcohol content is reduced to values of m lower than 2 and preferably comprised between 0.3 and 1.5 mols per mol of magnesium dihalide, (b) the treatment of said thermally dealcoholated adduct with chemical reagents capable of reacting with the OH groups of the alcohol and of further dealcoholating the adduct until the content is reduced to values which are generally lower than 0.5 mols and (c) the reaction of said chemically dealcoholated adduct with a Ti compound of formula Ti(OR)_{n-y}X_{y}, where X, R, n, and y have the same meanings described above.

The treatment with the dealcoholating chemical agents is carried out by using an amount of such an agent which is large enough to react with the OH groups present in the alcohol contained in the adduct. Preferably, the treatment is carried out using a slight excess of said agent, which is then removed prior to the reaction of the titanium compound with the thus obtained support.

In the event that the chemical dealcoholation of the MgCl₂·pR^{II}OH adduct is carried out by using agents having a reducing activity, for instance an Al-alkyl compound such as Al-triethyl, the thus obtained compound, prior to the reaction with the titanium compound, can be treated with a deactivating agent, for instance O₂, in order to deactivate the Al-triethyl possibly present therefore avoiding the reduction of the titanium compound.

The treatment with deactivating agents is avoided when one wishes to at least partially reduce the titanium compound. If, on the other hand, one wishes to reduce the titanium compound to a very great extent, the process for preparing the catalyst component can advantageously comprise the use of reducing agents.

This specific method provides solid catalyst components having obtained according to the methods that comprise the use of MgCl₂·pEtOH adducts generally show a low surface area (by B.E.T. method) generally between 1 and 70 m²/g, and a porosity (Hg method) due to pores with radius up to 1µ generally ranges from 0.4 to 0.6 cm³/g.

As explained above, the porous catalyst component is pre-polymerized with propylene. The pre-polymerization is normally carried out in the presence of an Al-alkyl compound.

The alkyl-Al compound (B) is preferably chosen among the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃.

It has been found particularly advantageous to carry out said pre-polymerization using low amounts of alkyl-Al compound. In particular said amount could be such as to have an Al/Ti molar ratio from 0.001 to 50, preferably from 0.01 to 10 and more preferably from 0.05 to 2.5.

The pre-polymerization can be carried out in liquid phase, (slurry or solution) or in gas-phase at temperatures generally lower than 50°C, preferably between -20 and 30°C and more preferably between -10 and 20°C. Furthermore, it is preferably carried out in a liquid diluent in particular selected from liquid hydrocarbons. Among them, pentane, hexane and heptane are preferred.

As mentioned above, the prepolymerized catalyst is then (co)polymerized with ethylene in under specific conditions in order to prepare the porous ethylene polymer. The ethylene (co)polymerization can be carried out likewise pre-polymerization with propylene described before, viz., in liquid phase, (slurry or solution) or in gas-phase. Preferably, it is carried out in the same liquid diluents mentioned above. The temperature is not particularly critical and temperatures ranging from -20 to 100°C (if compatible with the polymerization medium used) can be used.

The pre-polymer-catalyst system prepared in step (i) can be re-activated for step (ii) using an organoaluminum compound as those described for the activation of the catalyst component in step (i). As mentioned above, the extent of polymerization must be such that the amount of ethylene polymer produced polymer ranges from 10g to 2.5 kg per g of propylene pre-polymer.

The desired extent of polymerization can be obtained by carrying out the polymerization in reactors provided with means for controlling the monomer consumption. In these reactors (very well known in the art and commercially available), the amount of monomer consumed (assumed to be corresponding to that polymerized) is continuously monitored and the polymerization reaction can be stopped once the consumed monomer has reached the desired level.

Another way of obtaining the desired amount of polymer is that using a catalyst having a known kinetic behavior under certain conditions. In this way, the desired amount of polymer will be obtained by setting the polymerization time. If unknown, the kinetic behavior for a given catalyst can be determined by making a series of polymerization test under constant polymerization conditions with different polymerization times.

By the use of the process of the invention polyethylene polymers with a very high porosity can be obtained. The total porosity due to pores with radius up to 10µm, determined with the method reported below and expressed as percentage of voids, is generally higher than 40% and in particular higher than 50%. In many cases also porosity in the range 55-75% have been obtained. If expressed in terms of cm³/g the porosity is higher than 1 preferably higher than 1.2 and more preferably higher than 1.4. The porosity is also well distributed because the fraction of porosity due to pores with radius up to 1µm generally ranges from 25 to 70% of the total porosity more specifically from 30 to 70% thus leaving an effective amount of porosity deriving from larger pores.

The enhanced porosity of some polymers obtainable with the process of the present invention make them particularly suitable for being used as inert support for catalyst systems.

It is therefore a further object of the present invention a catalyst system comprising:
A) an ethylene polymer having porosity expressed as percentage of voids, higher than 40% cm³/g;
B) at least one transition metal organometallic compound; and
C) an alumoxane or a compound able to form an alkylmetallocene cation.

Preferably in the component A the fraction of porosity due to pores with radius up to 1µm ranges from 25 to 70% of the total porosity due to pores with radius up to 10 µm. Transition metal organometallic compounds for use in the catalyst system in accordance with the present invention are compounds suitable as olefin polymerization catalysts by coordination or insertion polymerization. The class includes known transition metal compounds useful in traditional Ziegler-Natta coordination polymerization, the metallocene compounds similarly and the late transition metal compounds known to be useful in coordination polymerization. These will typically include Group 4-10 transition metal compounds wherein at least one metal ligand can be abstracted by the catalyst activators.

Preferably in the porous ethylene polymer component A) of the catalyst system the total porosity due to pores with radius up to 10µm, determined with the method reported below and expressed as percentage of voids, is higher than 50%, preferably in the range 55-75%. If expressed in terms of cm³/g the porosity is higher than 1 preferably higher than 1.2 and more preferably higher than 1.4. Moreover the fraction of porosity due to pores with radius up to 1µm generally ranges from 25 to 70% of the total porosity more specifically from 30 to 70%.

A preferred class of transition metal organometallic compounds are metallocene compounds belonging to the following formulas (I), (II) and (III): 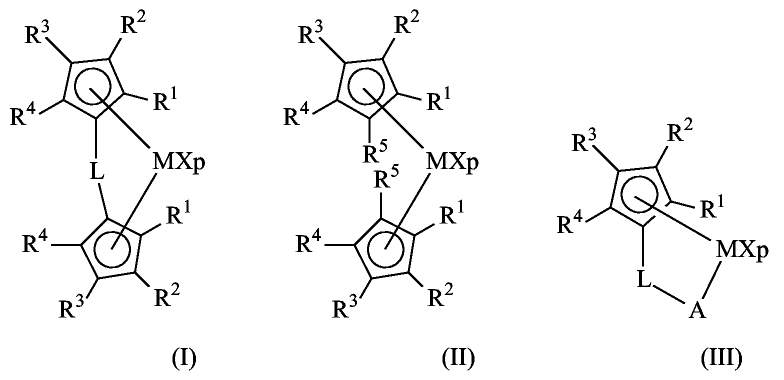 wherein
M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl group, optionally containing one or more Si or Ge atoms; the substituents X are preferably the same and are preferably R⁶, OR⁶ and NR⁶₂; wherein R⁶ is preferably a C₁-C₇ alkyl, C₆-C₁₄ aryl or C₇-C₁₄ arylalkyl group, optionally containing one or more Si or Ge atoms; more preferably, the substituents X are selected from the group consisting of -Cl, -Br, -Me, -Et, -n-Bu, -sec-Bu, -Ph, -Bz, -CH₂SiMe₃, -OEt, -OPr, -OBu, -OBz and -NMe₂;
**p** is an integer equal to the oxidation state of the metal M minus 2;
L is a divalent bridging group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms such as SiMe₂, SiPh₂; preferably L is a divalent group (ZR⁷ₘ)ₙ; Z being C, Si, Ge, N or P, and the R⁷ groups, equal to or different from each other, being hydrogen or linear or branched, saturated or unsaturated C₁-C₂₀ alkyl, C₃-C₂₀cycloalkyl, C₆-C₂₀ aryl, C₇-C₂₀ alkylaryl or C₇-C₂₀ arylalkyl groups or two R⁷ can form a aliphatic or aromatic C₄-C₇ ring;
m is 1 or 2, and more specifically it is 1 when Z is N or P, and it is 2 when Z is C, Si or Ge; n is an integer ranging from 1 to 4; preferably n is 1 or 2;
more preferably L is selected from Si(CH₃)₂, SiPh₂, SiPhMe, SiMe(SiMe₃), CH₂, (CH₂)₂, (CH₂)₃ or C(CH₃)₂;
R¹ R², R³, R⁴ and R⁵, equal to or different from each other, are hydrogen atoms, halogen atoms or linear or branched, saturated or unsaturated C₁-C₂₀-alkyl, C₃-C₂₀-cycloalkyl, C₆-C₂₀-aryl, C₇-C₂₀-alkylaryl, or C₇-C₂₀-arylalkyl radicals, optionally containing one or more heteroatoms belonging to groups 13-17 of the Periodic Table of the Elements; or two adjacent R¹, R², R³, R⁴ and R⁵ form one or more 3-7 membered ring optional containing heteroatoms belonging to groups 13-17 of the periodic table; such as to form with the cyclopentadienyl moiety, for example, the following radicals: indenyl; mono-, di-, tri- and tetra-methyl indenyl; 2-methyl indenyl, 3-^{t}butyl-indenyl, 2-isopropyli-4-phenyl indenyl, 2-methyl-4-phenyl indenyl, 2-methyl-4,5 benzo indenyl; 3-trimethylsilyl-indenyl; 4,5,6,7-tetrahydroindenyl; fluorenyl; 5,10-dihydroindeno[1,2-b]indol-10-yl; N-methyl- or N-phenyl-5,10-dihydroindeno [1,2-b]indol-10-yl; 5,6-dihydroindeno[2,1-b]indol-6-yl; N-methyl-or N-phenyl-5,6-dihydroindeno[2,1-b]indol-6-yl; azapentalene-4-yl; thiapentalene-4-yl; azapentalene-6-yl; thiapentalene-6-yl; mono-, di- and trimethyl-azapentalene-4-yl, 2,5-dimethyl-cyclopenta[1,2-b:4,3-b']-dithiophene.

Suitable metallocene complexes belonging to formulas (I), (II) or (III) are described in WO 98/22486, WO 99/58539 WO 99/24446, USP 5,556,928, WO 96/22995, EP-485822, EP-485820, USP 5,324,800, EP-A-0 129 368, USP 5,145,819, EP-A-0 485 823, WO 01/47939, WO 01/44318, PCT/EP02/13552, EP-A-0 416 815, EP-A-0 420 436, EP-A-0 671 404, EP-A-0 643 066 and WO-A-91/04257.

A further preferred class of transition metal organometallic catalyst compounds are late transition metal complex of formula (IV) or (V)

L^{a}M^{a}X^{a} ₚ^{a} (IV) L^{a}M^{a}A^{a} (V)

wherein M^{a} is a metal belonging to Group 8, 9, 10 or 11 of the Periodic Table of the Elements (new IUPAC notation);
L^{a} is a bidentate or tridentate ligand of formula (VI): 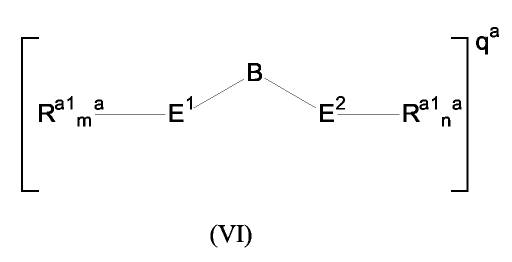 wherein:
B is a C₁-C₅₀ bridging group linking E¹ and E², optionally containing one or more atoms belonging to Groups 13-17 of the Periodic Table;
E¹ and E², the same or different from each other, are elements belonging to Group 15 or 16 of the Periodic Table and are bonded to said metal M^{a};
the substituents R^{a1}, equal to or different from each other, are selected from the group consisting of hydrogen, linear or branched, saturated or unsaturated C₁-C₂₀ alkyl, C₃-C₂₀ cycloalkyl, C₆-C₂₀ aryl, C₇-C₂₀ alkylaryl and C₇-C₂₀ arylalkyl radicals, optionally containing one or more atoms belonging to groups 13-17 of the Periodic Table of the Elements (such as B, Al, Si, Ge, N, P, O, S, F and Cl atoms); or two R^{a1} substituents attached to the same atom E¹ or E² form a saturated, unsaturated or aromatic C₄-C₇ ring, having from 4 to 20 carbon atoms;
m^{a} and n^{a} are independently 0, 1 or 2, depending on the valence of E¹ and E², so to satisfy the valence number of E¹ and E²; q^{a} is the charge of the bidentate or tridentate ligand so that the oxidation state of M^{a}X^{a}ₚX^{a}'ₛ or M^{a}A^{a} is satisfied, and the compound (IV) or (V) is overall neutral; X^{a}, the same or different from each other, are monoanionic sigma ligands selected from the group consisting of hydrogen, halogen, R^{a}, OR^{a}, OSO₂CF₃, OCOR^{a}, SR^{a}, -NR^{a}₂ and PR^{a}₂ groups, wherein the R^{a} substituents are linear or branched, saturated or unsaturated, C₁-C₂₀ alkyl, C₃-C₂₀ cycloalkyl, C₆-C₂₀ aryl, C₇-C₂₀ alkylaryl or C₇-C₂₀ arylalkyl radicals, optionally containing one or more atoms belonging to groups 13-17 of the Periodic Table of the Elements (new IUPAC notation), such as B, N, P, Al, Si, Ge, O, S and F atoms; or two X^{a} groups form a metallacycle ring containing from 3 to 20 carbon atoms; the substituents X^{a} are preferably the same;
p^{a} is an integer ranging from 0 to 3, so that the final compound (IV) or (V) is overall neutral; and
A^{a} is a π-allyl or a π-benzyl group.

Non limiting examples of late transition metal complexes are those described in WO 96/23010, WO 97/02298, WO 98/40374 and *J.Am.Chem.Soc.* 120:4049-4050, 1998. Brookhart et al, J. Am. Chem. Soc. 1995, 117, 6414 and Brookhart et al, J. Am. Chem. Soc., 1996, 118, 267, Brookhart et al, J. Am. Chem. Soc. 1998, 120, 4049, Gibson et al, Chem. Commun. 1998, 849, WO 96/27439 and Chem. Ber./Recl. (1997), 130(3), 399-403.

The alumoxanes used as component C) in the catalyst according to the invention are considered to be linear, branched or cyclic compounds containing at least one group of the type: 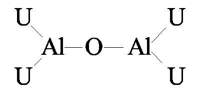 wherein the substituents U, same or different, are defined above.

In particular, alumoxanes of the formula: 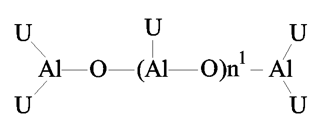 can be used in the case of linear compounds, wherein n¹ is 0 or an integer of from 1 to 40 and the substituents U are defined as above; or alumoxanes of the formula: 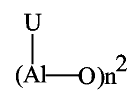 can be used in the case of cyclic compounds, wherein n² is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Non-limiting examples of aluminium compounds that can be reacted with water to give suitable alumoxanes (b), described in WO 99/21899 and WO01/21674, are:
tris(2,3,3-trimethyl-butyl)aluminium, tris(2,3-dimethyl-hexyl)aluminium, tris(2,3 -dimethyl-butyl)aluminium, tris(2,3-dimeihyl-pentyl)aluminium, tris(2,3 -dimeihyl-heptyl)aluminium, tris(2-methyl-3-ethyl-pentyl)aluminium, tris(2-methyl-3-ethyl-hexyl)aluminiurn, tris(2-methyl-3-ethyl-heptyl)aluminium, tris(2-methyl-3-propyl-hexyl)aluminium, tris(2-ethyl-3-methyl-butyl)aluminium, tris(2-ethyl-3-methyl-pentyl)aluminium, tris(2,3 -diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethyl-pentyl)aluminium, tris(2-isopropyl-3,3-dimethylbutyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluoro-phenyl)-propyl]aluminium, tris[2-(4-chloro-phenyl)-propyllaluminiurn, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation (C) are compounds of formula D⁺E⁻, wherein D⁺ is a Brønsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be removed by an olefinic monomer. Preferably, the anion E⁻ comprises one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula BAr₃ can be conveniently used. Compounds of this type are described, for example, in the International patent application WO 92/00333. Other examples of compounds able to form an alkylmetallocene cation are compounds of formula BAr₃P wherein P is a substituted or unsubstituted pyrrol radical. These compounds are described in WO01/62764. Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula D⁺E⁻ are:
Triethylammoniumtetra(phenyl)borate,
Tributylammoniumtetra(phenyl)borate,
Trimethylammoniumtetra(tolyl)borate,
Tributylammoniumtetra(tolyl)borate,
Tributylammoniumtetra(pentafluorophenyl)borate,
Tributylammoniumtetra(pentafluorophenyl)aluminate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetra(phenyl)borate,
N,N-Diethylaniliniumtetra(phenyl)borate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Triethylphosphoniumtetrakis(phenyl)borate,
Diphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(pentafluorophenyl)aluminate,
Triphenylcarbeniumtetrakis(phenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.

The heterogeneous catalyst system object of the present invention, can be obtained depositing transition metal organometallic compound (B) or the product of the reaction thereof with the component (C), or the component (C) and then transition metal organometallic compound (B) on the porous polyethylene polymer (A). The supportation process is carried out in an inert solvent such as hydrocarbon for example toluene, hexane, pentane or propane and at a temperature ranging from 0°C to 100°C, preferably the process is carried out at a temperature ranging from 25°C to 90°C. A preferred supportation process is described in WO 01/44319.

A particularly suitable process for supporting the catalyst system is described in WO01/44319, wherein the process comprises the steps of:
(a) preparing a catalyst solution comprising a catalyst system;
(b) introducing into a contacting vessel:
   (i) a porous support material in particle form, and
   (ii) a volume of the catalyst solution not greater than the total pore volume of the porous support material introduced;
(c) discharging the material resulting from step (b) from the contacting vessel and suspending it in an inert gas flow, under such conditions that the solvent evaporates; and
(d)reintroducing at least part of the material resulting from step (c) into the contacting vessel together with another volume of the catalyst solution not greater than the total pore volume of the reintroduced material.

The above described catalysts system can be used in the preparation of various types of olefin (co)polymer. For example the following products can be prepared: high density ethylene polymers (HDPE, having a density higher than 0.940 g/cm³), comprising ethylene homopolymers and copolymers of ethylene with alpha-olefins having 3-12 carbon atoms; linear low density polyethylenes (LLDPE, having a density lower than 0.940 g/cm³) and very low density and ultra low density (VLDPE and ULDPE, having a density lower than 0.920 g/cm³, to 0.880 g/cm³ cc) consisting of copolymers of ethylene with one or more alpha-olefins having from 3 to 12 carbon atoms, having a mole content of units derived from the ethylene higher than 80%; elastomeric copolymers of ethylene and propylene and elastomeric terpolymers of ethylene and propylene with smaller proportions of a diene having a content by weight of units derived from the ethylene comprised between about 30 and 70%, isotactic polypropylenes and crystalline copolymers of propylene and ethylene and/or other alpha-olefins having a content of units derived from propylene higher than 85% by weight (random copolymers); shock resistant polymers of propylene obtained by sequential polymerization of propylene and mixtures of propylene with ethylene, containing up to 30% by weight of ethylene; copolymers of propylene and 1-butene having a number of units derived from 1-butene comprised between 10 and 40% by weight.

The following examples are given in order better illustrate the invention without limiting it.

### EXAMPLES

### Characterization

### General procedure for the standard propylene polymerization test

A 4 liter steel autoclave equipped with a stirrer, pressure gauge, thermometer, catalyst feeding system, monomer feeding lines and thermostatting jacket, was used. The reactor was charged with 0.01 g of solid catalyst component and with TEAL, and cyclohexyl-methyl dimethoxy silane in such amounts to give an Al/Si molar ratio of 4. Moreover, 3.2 1 of propylene, and 1.5 1 of hydrogen were added. The system was heated to 70°C over 10 min. under stirring, and maintained under these conditions for 120 min. At the end of the polymerization, the polymer was recovered by removing any non-reacted monomers and was dried under vacuum.

### Determination of Xylene Insolubility

2.5 g of polymer were dissolved in 250 ml of o-xylene under stirring at 135°C for 30 minutes, then the solution was cooled to 25°C and after 30 minutes the insoluble polymer was filtered. The resulting solution was evaporated in nitrogen flow and the residue was dried and weighed to determine the percentage of soluble polymer and then, by difference the xylene insoluble fraction (%).

The properties are determined according to the following methods:
- Porosity and surface area with nitrogen: are determined according to the B.E.T. method (apparatus used SORPTOMATIC 1900 by Carlo Erba).
- Porosity and surface area with mercury:
   The measure is carried out using a "Porosimeter 2000 series" by Carlo Erba.
   The porosity is determined by absorption of mercury under pressure. For this determination use is made of a calibrated dilatometer (diameter 3 mm) CD₃ (Carlo Erba) connected to a reservoir of mercury and to a high-vacuum pump (1·10⁻² mbar).
   A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm². Under the effect of the pressure, the mercury enters the pores and the level goes down according to the porosity of the material.
   The porosity (cm³/g), both total and that due to pores up to 1µm for catalysts (10µm for polymers), the pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.

### Example 1

PREPARATION OF THE SPHERICAL SUPPORT (ADDUCT MgCl₂/EtOH A magnesium chloride and alcohol adduct was prepared following the method described in example 2 of USP 4,399,054, but working at 2000 RPM instead of 10000 RPM.

### Preparation of Solid Catalyst Component

The spherical support, prepared according to the general method underwent a thermal treatment, under N₂ stream, over a temperature range of 50-150°C until spherical particles having a residual alcohol content of about 25% were obtained.

Into a 72 l steel reactor provided with stirrer, 44 liters of TiCl₄ at 0°C and whilst stirring 2200 g of the support were introduced. The whole was heated to 130°C over 60 minutes and these conditions were maintained for a further 60 minutes. The stirring was interrupted and after 30 minutes the liquid phase was separated from the settled solid. Thereafter 4 washings with anhydrous hexane (about 22 liters) were performed two of which were carried out at 80°C and two at room temperature.

Then, after the addition of 31 liters of anhydrous hexane, 11 liters of a solution of tris(2,4,4-trimethyl-pentyl)aluminum (Tioa) in hexane (100 g/l) were introduced at room temperature into the reactor and stirred for 30 minutes. The liquid phase was separated from the settled solid that was washed with 22 liters of hexane and with 22 liters of heptane (twice for each other) at room temperature.

Thereafter a further treatment with 44 liters of TiCl₄ was performed under the same condition used for the first one, and after 4 washings with anhydrous hexane, 2200 g of the spherical solid component were obtained. After drying under vacuum at about 50°C, the solid showed the following characteristics:
- Total titanium 4.52 % (by weight)
- Ti^{III} 1.2 % (by weight)
- Al 0.2 % (by weight)
- Mg 20.0 % (by weight)
- Cl 71.3 % (by weight)
- OEt 0.5 % (by weight)
- porosity (B.E.T.) 0.153 cm³/g,
- surface area (B.E.T.) 50.6 m²/g
- total porosity (Hg) 0.692 cm³/g, 70% of which was due to pores with radius up to 0.1µm.
Porosity due to pores with radius up to 1µm: 0.552

### Preparation of the pre-polymerized catalyst:

Into a 40 liters stainless steel reactor provided with stirrer, 36 liters of hexane at temperature of 10°C and whilst stirring 1200 g of the spherical catalyst were introduced. Keeping constant the internal temperature, 360 g of tris(2,4,4-trimethyl-pentyl)aluminum (Tioa) in hexane (about 100 g/l) were (slowly) introduced at room temperature into the reactor. Then propylene was carefully introduced into the reactor at the same temperature (with a propylene partial pressure of 0.2 bar). The consumption of propylene in the reactor was monitored and the polymerization was discontinued when a theoretical conversion of 1.2 g of polymer per g of catalyst was deemed to be reached. After 3 hexane washing at T = 20°C (50 g/l), we dried and analyzed the resulting pre-polymerized catalyst that contained 1 g of polypropylene per g of catalyst.

### Ethylene polymerization

Into a 2.5 liters glass reactor, degassed under N₂ stream at 20°C, 1 liter of anhydrous hexane, 4.0 g of pre-polymerized catalyst and 40 g of triisobutylaluminum (Tiba) were introduced. The whole was stirred, kept at 20°C and 40 mmHg of ethylene were fed. The polymerization lasted 5 hours during which the polymerization ethylene was fed to keep the pressure constant. The polymer was recovered and the characterization of which is reported in Table 1.

### Example 2

The polymerization was carried out with same procedure as described in Example 1 with the difference that 4.0 g of triisobutylaluminum (TIBA) were used and that the polymerization was carried out at -10°C for 3.5 hours. The polymer was recovered and the characterization of which is reported in Table 1.

### Example 3

The polymerization was carried out with same procedure as described in Example 2 with the difference that the polymerization was carried out at 60°C for 6.0 hours. The polymer was recovered and the characterization of which is reported in Table 1.

### Example 4

The polymerization was carried out with same procedure as described in Example 2 with the difference that the polymerization was carried out at 20°C for 2.2 hours. The polymer was recovered and the characterization of which is reported in Table 1.

### Example 5

The polymerization was carried out with same procedure as described in Example 3 with the difference that 2.28 g of triethylaluminum (TEAL) were used. The polymerization was carried out at 60°C for 3.2 hours. The polymer was recovered and the characterization of which is reported in Table 1.

### Example 6

The polymerization was carried out in a 2.0 liters stainless steel autoclave, using 0.5 g of pre-polymerized catalyst prepared as described in Example 1 and 0.5 g of triisobutylaluminum (TIBA). The whole was stirred, kept at 20°C and 0.5 bar of ethylene of ethylene was fed.

The polymerization was carried out at 20°C for 11.5 hours. The polymer was recovered and the characterization of which is reported in Table 1.

### Comp. Example 1

The polymerization was carried out with same procedure as described in Example 6 with the difference that 0.5 g of TIBAL and 0.015 g of pre-polymerized catalyst were used. Then the ethylene pressure was 7 bar and 4 bar of hydrogen were fed into the reactor.

The polymerization was carried out at 70°C for 3 hours. 470 g of ethylene polymer were recovered the characterization of which is reported in Table 1.

### Example 7

The polymerization was carried out with same procedure as described in Example 6 with the difference that the polymerization was carried out at 35°C, under an initial ethylene pressure of 4 bar which was not kept constant, for 1 hour. 65 g of ethylene polymer were recovered the characterization of which is reported in Table 1.

### Example 8

The spherical support containing about 3 mols of alcohol prepared according to the procedure described in Example 1 underwent a thermal treatment (under N₂ stream), over a temperature range of 50-150°C, until spherical particles having a residual alcohol content about 35% were obtained.

Into a 1600 litres steel reactor provided with stirrer, 350 litres of heptane and 70 Kg of the dealcoholated support were introduced.

The temperature was kept at 20°C while 30.2 Kg of Teal (in heptane 100 g/l solution) were carefully added whilst stirring.

The reactor was heated at 40°C in one hour and these conditions were maintained for a further 120 minutes. The stirring was interrupted and after 30 minutes, the liquid phase was siphoned from the reactor and the settled solid was washed three times with heptane. Then fresh heptane was added to obtain a concentration of 85 g/l.

In a different steel reactor (600 litres of volume), 128.8 Kg of Ti(OBu)₄ were introduced. Then, stirring at 300 rpm and keeping temperature constant at 20°C, 99.8 Kg of SiCl₄ in 105 minutes were added. The resulting solution was stirred for 20 minutes at that temperature.

The whole solution was added into the 1600 litres reactor in 90 minutes at 20°C.

The reactor was heated at 60°C and the conditions were kept constant for 120 minutes.

After this period, the stirring was stopped and after 30 minutes the liquid phase was separated from the solid.

The solid was washed eight times with fresh heptane at 70 g/l and then dried under vacuum.

The resulting catalyst component in spherical form exhibited the following characteristics:

| | |
|---|---|
| Total Titanium | 8.4% |
| Titanium 3+ | 8.1 % |
| Chlorine | 48.6% |
| Magnesium | 11.9% |
| Aluminum | 0.2% |
| EtO- group | 7.5% |
| BuO-group | 16.6% |
| Porosity (mercury) | 0.520 cm³/g due to pores with a radius up to 10,000Å. |

### Standard propylene polymerization test

The above-described catalyst component was used in the polymerization of propylene according to the general procedure already described. It was produced a propylene homopolymer having an insolubility in xylene of 81%.

### Preparation of the pre-polymerized catalyst :

Into a 2.5 liters glass reactor provided with stirrer, 1.5 liters of hexane at 20°C and whilst stirring 40 g of the catalyst prepared as above described were introduced. Keeping constant the internal temperature, 4g of triethylaluminum (TEAL) in hexane (about 20 g/l) were slowly introduced at room temperature into the reactor. Then propylene was carefully introduced into the reactor at the same temperature with a propylene partial pressure of 40 mmHg. The consumption of propylene in the reactor was monitored and the polymerization was discontinued when a theoretical conversion of 1.1 g of polymer per g of catalyst was deemed to be reached. After 3 hexane washing at a temperature of 20°C (50 g/l), we dried and analyzed the resulting pre-polymerized catalyst that contained 1.0 g of polypropylene per g of catalyst.

### Ethylene polymerization

Into a 2.5 liters glass reactor, degassed under N₂ stream at 20°C, 1 liter of anhydrous hexane, 4.0 g of pre-polymerized catalyst and 4 g of triisobutylaluminum (Tiba) were introduced. The whole was stirred, kept at 20°C and 5.32•10⁻³ MPa of ethylene were fed.

The polymerization lasted 3 hours during which the polymerization ethylene was fed to keep the pressure constant. The polymer was recovered and the characterization of which is reported in Table 1.

### Example 9

### Preparation of Solid Catalyst Component

The spherical support containing about 3 mols of alcohol prepared according to the procedure described in Example 1 underwent a thermal treatment (under N₂ stream), over a temperature range of 50-150°C, until spherical particles having a residual alcohol content about 15% were obtained. Into a 72 l steel reactor provided with stirrer, 44 liters of TiCl₄ at 0°C and whilst stirring 4400 g of the support were introduced. The whole was heated to 100°C over 60 minutes and these conditions were maintained for a further 60 minutes. The stirring was interrupted and after 30 minutes the liquid phase was separated from the settled solid. The treatment with TiCl₄ was carried out for additional two times with the same procedure but using at a temperature of 120 and 130°C respectively. Thereafter 4 washings with anhydrous hexane (about 22 liters) were performed two of which were carried out at 80°C and two at room temperature. The analysis carried out on the so obtained solid gave the following results:

| | |
|---|---|
| Total Titanium | 3.5% |
| Chlorine | 70.7% |
| Magnesium | 20% |
| EtO- group | 0.5% |

### Standard propylene polymerization test

The above-described catalyst component was used in the polymerization of propylene according to the general procedure already described. It was produced a propylene homopolymer having an insolubility in xylene of 78.5%.

### Preparation of the pre-polymerized catalyst :

Into a 40 liters stainless steel reactor provided with stirrer, 36 liters of hexane at temperature of 10°C and whilst stirring 1200 g of the spherical catalyst were introduced. Keeping constant the internal temperature, 360 g of tris(2,4,4-trimethyl-pentyl)aluminum (Tioa) in hexane (about 100 g/l) were (slowly) introduced at room temperature into the reactor. Then propylene was carefully introduced into the reactor at the same temperature (with a propylene partial pressure of 0.2 bar). The consumption of propylene in the reactor was monitored and the polymerization was discontinued when a theoretical conversion of 1.2 g of polymer per g of catalyst was deemed to be reached. After 3 hexane washing at T = 20°C (50 g/l), we dried and analyzed the resulting pre-polymerized catalyst that contained 1 g of polypropylene per g of catalyst.

### Ethylene polymerization (HDPE)

The polymerization was carried out with same procedure as described in Example 8 with the difference that the polymerization lasted 2.3 hours. The polymer was recovered and the characterization of which is reported in Table 1.

### Comp. Example 2

### Preparation of the pre-polymerized catalyst :

Into a 40 liters glass reactor provided with stirrer, 36 liters of hexane at temperature of 10°C and whilst stirring 1200 g of the spherical catalyst were introduced. Keeping constant the internal temperature, 60 g of Teal in hexane (about 100 g/l) were (slowly) introduced at room temperature into the reactor. Then ethylene was carefully introduced into the reactor at the same temperature (with a ethylene partial pressure of 0.2 bar). The consumption of ethylene in the reactor was monitored and the polymerization was discontinued when a theoretical conversion of 1.2 g of polymer per g of catalyst was deemed to be reached. After 3 hexane washing at T = 20°C (50 g/l), we dried and analyzed the resulting pre-polymerized catalyst that contained 1 g of polyethylene per g of catalyst.

### Ethylene polymerization (HDPE)

The polymerization was carried out with same procedure as described in Example 9 with the difference that the polymerization lasted 2.0 hours. The polymer was recovered and the characterization of which is reported in Table 1.

**Table 1**

| Example | Conversion | Bulk density | Porosity | |
|---|---|---|---|---|
| | g/g | g/cm³ | cm³/g | %Vol |
| 1 | 52 | 0.27 | 1.59 | 63.4 |
| 2 | 14 | 0.259 | 1.77 | 63 |
| 3 | 32 | 0.205 | 2.38 | 70.2 |
| 4 | 57 | 0.265 | 1.76 | 60.7 |
| 5 | 13 | n.d. | 2.44 | 70.8 |
| 6 | 580 | 0.220 | 1.3 | 54.2 |
| 7 | 130 | 0.168 | | |
| 8 | 84 | 0.214 | 0.88 | 47.8 |
| 9 | 60 | 0.272 | 1.2 | 52.8 |
| Comp. 1 | 27900 | 0.335 | 0.37 | 26.6 |
| Comp. 2 | 180 | 0.4 | 0.5 | 33 |

## Claims

1. A process for the preparation of a porous ethylene polymer comprising:
(i) prepolymerizing propylene in the presence of a Mg, Ti, and halogen containing solid catalyst component having a porosity, measured by the mercury method set forth in the description, higher than 0.25 cm³/g up to producing from 0.1 to 15 g of propylene pre-polymer per g of catalyst component; and
(ii) polymerizing ethylene in the presence of the propylene pre-polymer obtained in step (i) up to an amount of ethylene polymer ranging from 10g to 2.5 kg per g of propylene pre-polymer.

2. The process according to claim 1 in which step (i) is carried out under conditions such that the amount of propylene pre-polymer produced is from 0.3 to 10 g per g of catalyst component

3. The process according to claim 1 in which in step (ii) the amount of ethylene polymer is less than 1 kg per g of propylene pre-polymer.

4. The process according to claim 1 in which the catalyst component used in step (i) comprises a titanium compound supported on a magnesium dihalide.

5. The process according to claim 4 in which the titanium compound is selected from those of formula Ti(OR)_{n-y}X_{y}, where R is a C1-C20 hydrocarbon group, X is halogen, n is the valence of titanium and y is a number between 0 and n.

6. The process according to claim 4 in which the solid catalyst component has a porosity referred to pores having radius up to 1µ, and measured by the mercury method set forth in the description, higher than 0.3 cm³/g.

7. The process according to claim 1 in which the catalyst component used in step (i) is non-stereospecific.

8. An ethylene polymer having a total porosity due to pores with radius up to 10µm, determined with the method set forth in the description, expressed as percentage of voids, higher than 40%.

9. The ethylene polymer of claim 8 having a porosity higher than 50%.

10. The ethylene polymer of claim 8 in which because the fraction of porosity due to pores with radius up to 1µm ranges from 25 to 70% of the total porosity due to pores with radius up to 10 µm.

11. A catalyst system comprising:
(a) an ethylene polymer having porosity expressed as percentage of voids, higher than 40% cm³/g;
(b) at least one transition metal organometallic compound; and
(c) an alumoxane or a compound able to form an alkylmetallocene cation.

12. The catalyst system according to claim 1 wherein in the porous ethylene polymer the fraction of porosity due to pores with radius up to 1µm ranges from 25 to 70% of the total porosity.

13. The catalyst according to claim 12 wherein the ethylene polymer has porosity higher than 1.2 cm³/g.

14. The catalyst according to anyone of claims 12-13 wherein transition metal organometallic compounds are metallocene compounds belonging to the following formulas (I), (II) and (III): 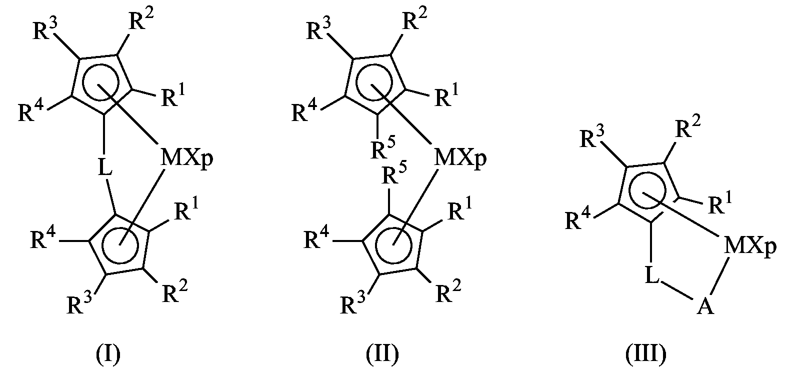 wherein
M is a transition metal belonging to group 4, 5 or to the lanthanide or actinide groups of the Periodic Table of the Elements;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl group, optionally containing one or more Si or Ge atoms;
**p** is an integer equal to the oxidation state of the metal M minus 2;
L is a divalent bridging group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms;
R¹, R², R³, R⁴ and R⁵, equal to or different from each other, are hydrogen atoms, halogen atoms or linear or branched, saturated or unsaturated C₁-C₂₀-alkyl, C₃-C₂₀-cycloalkyl, C₆-C₂₀-aryl, C₇-C₂₀-alkylaryl, or C₇-C₂₀-arylalkyl radicals, optionally containing one or more heteroatoms belonging to groups 13-17 of the Periodic Table of the Elements; or two adjacent R¹, R², R³, R⁴ and R⁵ form one or more 3-7 membered ring optional containing heteroatoms belonging to groups 13-17 of the periodic table.
